# EUROPEAN PATENT APPLICATION

(11) **EP 0 691 372 A2**
(43) Date of publication of application: **10.01.1996**
(21) Application number: 95110227.6
(22) Date of filing: 30.06.1995
(51) Int. Cl.: C08K 5/103, C08K 5/098

(54) **Lubricants for thermoplastics and compositions containing them**

(30) Priority: 05.07.1994 IT MI941397
(71) Applicant: COMIEL S.p.A., I-20139 Milano (IT)
(72) Inventor: Viviani, Giovanni, I-20139 Milano (IT)
(74) Representative: Bianchetti, Giuseppe

(57) **Abstract**

Lubricants for thermoplastics, consisting of esters of "pure" stearic acid of very high purity, compositions containing the said lubricants and their use in the processing of plastics are described.

## Description

### Field of the invention

The present invention relates to lubricating agents for the processing of thermoplastics, especially polyvinyl chloride.

In the working of plastics, carried out by known methods of processing such as blowing of hollow bodies (bottles), calendering, injection moulding and extrusion, difficulties often arise as a result of adhesion of the plastics to the metallic parts of the machines, imperfect rheology of the polymer mass in the polymer melting stage, and in particular the high processing temperatures.

This problem is tackled by using suitable lubricants.

Products that are suitable for this purpose must meet certain requirements, so that they do not impair the mechanical properties of the plastics, so that they are compatible with the plastics and so that, for certain types of manufactured products, for example bottles and calendered films, they do not impair their transparency.

Especially for certain types of processes for processing polyvinyl chloride, such as blowing of hollow bodies for beverages and the calendering of transparent rigid films, the lubricants used must not promote the formation of deposits on the metallic parts of the processing machines (plate-out), which cause undesirable effects such as decrease of transparency, and formation and formation of black spots on the finished articles, the molten polymer must flow homogeneously and uniformly, and there must be no adhesion of the polymer to the metallic parts of the machines.

The foregoing is the more difficult and problematic the higher the processing speed of the machines, with consequent raising of the working temperatures.

Numerous lubricating agents have been proposed, among which the following may be mentioned: esters of polyols with montanic acids and corresponding metallic soaps; esters of polyols with pure behenic acid, at a concentration of behenic acid of around 90% and corresponding metallic soaps, for example as described in DE-OS-2619836; esters of polyols with mixtures of fatty acids that have a content of behenic acid of between 30 and 40% and corresponding metallic soaps, for example as described in EP-A-0439395.

The first two classes of products possess good application properties but their cost is very high, and this limits their use.

The third class of products involves the use of a mixture of fatty acids derived from natural products of various origins with the consequent difficulty of constancy of composition unless higher costs are afforded.

The use of esters of polyols with fatty acids that are available commercially at favourable prices, possessing well defined compositions, is also known, for example the so-called stearic acid, formed from a mixture of palmitic acid and stearic acid with a content of stearic acid varying from 45 to 65%, known commercially as "stearin", which exhibits many shortcomings with regard to the quality of the finished articles, in particular poor transparency, formation of black spots (especially in bottles), and formation of deposits on the dies and on the metallic parts of the machines: problems which mean that despite the cheapness of the products, their use cannot be recommended.

There is now an urgent need for a lubricant for thermoplastics that overcomes the technological shortcomings discussed above and at the same time is not characterized by high cost.

### Summary of the invention

It has now been found that lubricating agents consisting of esters of polyols with "pure" stearic acid, or of a metal salt of the said "pure" stearic acid, lead to results that are similar to those obtained with the more expensive lubricants consisting of montanic derivatives.

One object of the present invention is a lubricant for thermoplastics, in particular polyvinyl chloride, consisting of esters of polyols with "pure" stearic acid or of a metallic soap of the said stearic acid or, alternatively, of a mixture of the said esters with the said soap.

Another object of the present invention is a composition with lubricating action for thermoplastics that contains one or more esters of polyols with "pure" stearic acid or a metallic soap of the said acid or a mixture of them in combination with conventional vehicles and excipients.

Yet another object of the present invention is a process for the manufacture of plastics articles, in particular bottles, using a lubricant, or a composition with lubricating and stabilizing activity, according to the present invention.

### Detailed description of the invention

According to the present invention, "pure" stearic acid means the compound that has a content by weight greater than 80%, preferably greater than 90%, and more preferably between 95 and 100%.

Examples of polyols are aliphatic polyols possessing from 2 to 6 hydroxyl groups per molecule, such as ethylene glycol, 1,2-propylene glycol, 1,3-propylene glycol, 1,4-butanediol, 1,5-pentanediol, 1,6-hexanediol, glycerol, trimethylolpropane, pentaerythritol, dipentaerythritol and sorbitol.

According to the present invention, metallic soaps of "pure" stearic acid include those with divalent metals, such as calcium, magnesium and zinc; preferably calcium.

The "pure" stearic acid is obtained by fractional distillation, and therefore has the desired constancy of composition. This product is available commercially at economic levels such as make their esters and soaps viable from the standpoint of cost.

The esters of the present invention are obtained by methods that are known to a person skilled in the art. The "pure" stearic acid is made to react with the polyols in the presence of appropriate catalysts.

The metallic soaps of the present invention are available commercially or can be prepared by conventional means.

The mixtures of esters of "pure" stearic acid and metallic soaps can be produced either by mixing the two components previously prepared separately, or by reacting the polyol ester with metal oxides or hydroxides in the presence of an excess of "pure" stearic acid.

In a first embodiment of the present invention the lubricant consists of a polyol ester with "pure" stearic acid, or of a metallic soap of stearic acid, or of a mixture of the said ester and the said soap, in a ratio that can vary from 1% of the said ester and 99% of the said soap to 99% of the said ester and 1% of the said soap.

In particular, metallic soaps can be used as stabilizers.

In a second embodiment, the present invention provides a composition that has lubricating activity, comprising a lubricant according to the present invention and a polyethylene wax. These compositions also include conventional vehicles and additives. The compositions described here, when they contain a metallic soap of "pure" stearic acid, also have stabilizing activity.

The following examples illustrate the invention further. The products that are the subject of the present invention were tested for purposes of application in many formulations for industrial use in comparison with the other products described previously.

The tests used were: dynamic stability in a two-cylinder mixer at a working temperature of 210°C with verification of the initial colour and of the sticking time; measurement of transparency expressed as a percentage measured on small stamped plates 4 mm thick; industrial tests carried out on a bottle blowing machine and on a calender respectively.

The compositions are given in p.h.r. (part hundredth resin), i.e. percentages relative to the resin.

### EXAMPLE 1

### 1st formulation for bottles

| | |
|---|---|
| PVC Suspension K57 | 100 |
| High-impact modifier | 10 |
| Process aid | 1 |
| Epoxidized soybean oil | 5 |
| Calcium stearate | 0.30 |
| Zinc octoate (23% metal) | 0.10 |
| Rhodiastab 50® | 0.20 |
| Hydrogenated castor oil | 1.50 |
| Oxidized polyethylene wax | 0.20 |
| Lubricant | 0.50 |

The lubricants tested were:
- the products of the present invention which for convenience we shall call octadecanoates
- products based on behenic acid 90%
- products based on a mixture of fatty acids containing about 40% of behenic acid which we shall call behenates 40
- products based on montanic acid
- products based on ordinary commercial stearic acid which we shall call stearates.

The results are presented in the following table.

| | initial colour | sticking time | transparency (%) |
|---|---|---|---|
| glycerol octadecanoate calcium derivative | colourless | 30' | 78 |
| glycerol behenate 90 calcium derivative | colourless | 30' | 78 |
| glycerol behenate 40 calcium derivative | colourless | 28' | 76 |
| glycol montanate calcium derivative | colourless | 30' | 78 |
| glycerol stearate calcium derivative | colourless | 26' | 68 |

### EXAMPLE 2

### 2nd formulation for bottles

| | |
|---|---|
| PVC Suspension K57 | 100 |
| High-impact modifier | 10 |
| Epoxidized soybean oil | 5 |
| Calcium stearate | 0.3 |
| Zinc octoate (23% metal) | 0.10 |
| Rhodiastab 50® | 0.2 |
| Hydrogenated castor oil | 1.8 |
| Oxidized polyethylene wax | 0.3 |
| Lubricant | 0.3 |

The results are presented in the following table.

| | initial colour | sticking time | transparency (%) |
|---|---|---|---|
| Pentaerythritol octadecanoate calcium derivative | colourless | 33' | 79 |
| Pentaerythritol behenate 90 calcium derivative | colourless | 32' | 78 |
| Pentaerythritol behenate 40 calcium derivative | colourless | 31' | 78 |
| Glycol montanate calcium derivative | colourless | 33' | 79 |

### EXAMPLE 3

Formulation as Example 2, in which various calcium soaps are compared as stabilizers (zinc octoate of Example 2, the calcium soap of the present invention (calcium octadecanoate)) using the calcium derivative of glycerol octadecanoate as lubricant.

The results were:

| | initial colour | sticking time | transparency (%) |
|---|---|---|---|
| Calcium octadecanoate | colourless | 34' | 85 |
| Calcium behenate 40 | colourless | 33' | 80 |
| Calcium stearate | colourless | 30' | 78 |

### EXAMPLE 4

Formulation for blowing bottles, in which esters of the fatty acids are compared with the ester of the present invention (without the calcium derivative) using calcium octadecanoate as stabilizer.

| | |
|---|---|
| PVC Suspension K57 | 100 |
| High-impact modifier | 10 |
| Epoxidized soybean oil | 5 |
| Calcium octadecanoate | 0.4 |
| Zinc octoate (23% metal) | 0.1 |
| Rhodiastab 50® | 0.2 |
| Hydrogenated castor oil | 1.8 |
| Oxidized polyethylene wax | 0.3 |
| Lubricant | 0.3 |

The results were as follows:

| | initial colour | sticking time | transparency (%) |
|---|---|---|---|
| Glycerol octadecanoate | colourless | 34' | 80 |
| Glycerol montanate | colourless | 30' | 80 |
| Glycerol behenate 40 | colourless | 31' | 78 |
| Glycerol stearate | colourless | 27' | 60 |

### EXAMPLE 5

### Production of bottles in an extrusion blowing machine

Bottles were produced by extrusion blowing, using the same formulation as in Example 1) and in Example 3), verifying the quality of the bottles, the degree of transparency obtained, and formation on the dies and on the die-plate.

The profile of temperatures selected was as follows: 155 - 188 - 198 - 175 and 188°C, corresponding to the following real temperatures: 170-175, 189-193, 197-200, 175-178 and 188°C.

### Formula of Example 1)

Lubricants compared:
1) Glycerol octadecanoate, calcium derivative
2) Glycerol behenate 40, calcium derivative
3) Glycerol stearate, calcium derivative
4) Glycol montanate, calcium derivative

The bottles with products 1) and 4) were transparent and glossy, those with product 2) were transparent but less glossy, and those with product 3) had problems with transparency at the points of greatest thickness and were not very glossy.

No formation of deposits was encountered with products 1), 2) and 4), whereas with product 3) there was notable formation of deposit on the die.

### Formula of Example 3)

Calcium stabilizers compared:
- 1) Calcium octadecanoate: - Excellent transparency and gloss
- No deposit on the dies
- 2) Calcium behenate 40: - Good transparency and lower gloss
- 3) Calcium stearate: - Lower transparency and lower gloss
- Formation of deposits on the dies
- 4) Calcium behenate 90: - Excellent transparency and good gloss
- No deposit on the dies

### EXAMPLE 6

Co-stabilizers of the Hydrotalcite type are used in the blowing of bi-oriented bottles with PVC at high molecular weight K 62-64.

Special transparency and gloss are required in bottles of this type.

Bottles were produced using both calcium octadecanoate and glycol octadecanoate according to the following formulation.

| | |
|---|---|
| PVC Suspension K62 | 100 |
| High-impact modifier | 0.5 |
| Process aid | 0.15 |
| Calcium octadecanoate | 0.3 |
| Zinc octoate (23% metal) | 0.15 |
| Hydrotalcite | 0.70 |
| Rhodiastab 50® | 0.2 |
| Hydrogenated castor oil | 1.8 |
| Glycerol octadecanoate | 0.5 |

### EXAMPLE 7

The products of the present invention were tested in PVC formulations stabilized with organotin stabilizers, based on mono-octyl and dioctylthioglycolates.

| | |
|---|---|
| PVC | 100 |
| Tin stabilizer | 1.5 |
| High-impact modifier | 12 |
| Hydrogenated castor oil | 1.2 |
| Oxidized polyethylene wax | 0.2 |
| Lubricant | 0.6 |

The products compared and the results obtained are shown in the following table.

| | initial colour | sticking time | transparency (%) |
|---|---|---|---|
| Pentaerythritol octadecanoate calcium derivative | colourless | 35' | 90 |
| Pentaerythritol stearate calcium derivative | colourless | 26' | 75 |
| Pentaerythritol behenate 40 calcium derivative | colourless | 30' | 85 |
| Glycol montanate calcium derivative | colourless | 35' | 90 |

### EXAMPLE 8

### Preparation of the glycerol ester

Three moles of "pure" stearic acid containing 97% of C18 (octadecanoic acid) are heated in a 1500 ml reactor equipped with stirrer, thermometer and condenser under nitrogen atmosphere at about 85-90°C until melting occurs.

Still stirring the system, 1 mole of glycerol and 1 g of titanium isobutylate as catalyst are added.

Still stirring and still maintaining the nitrogen atmosphere, the system is heated gradually to 220°C and this temperature is maintained for about 1.5 hours. When the acid number is below 3, the system is cooled to about 140°C. This is followed by filtration and pulverization. The product obtained has a melting point of 64-65°C.

### EXAMPLE 9

### Preparation of the ester of pentaerythritol

The method is the same as the preceding, except that 4 moles of "pure" stearic acid containing 97% of C18 and 1 mole of pentaerythritol are used. The product has a melting point of 63-65°C.

### EXAMPLE 10

### Preparation of the pure calcium soap

"Pure" stearic acid containing 97% of C18 is reacted with calcium oxide or hydroxide according to the known techniques of preparation of metallic soaps.

### EXAMPLE 11

### Preparation of the mixtures of the polyol esters described above with 97% calcium stearate by "in situ" reaction

230 g of "pure" stearic acid containing 97% of C18 and 2.4 g of calcium hydroxide are added to 750 g of the esters in Examples 8) and 9), heating the system to about 140°C while stirring and under a nitrogen atmosphere.

A mixture containing about 75% of ester and 25% of calcium soap is obtained.

## Claims

1. Lubricant for thermoplastics, consisting of a polyol ester with pure stearic acid.

2. Lubricant according to Claim 1, characterized in that the said stearic acid has content greater than 80% w/w.

3. Lubricant according to Claim 2, characterized in that the said stearic acid has content greater than 90% w/w.

4. Lubricant according to Claim 3, characterized in that the said stearic acid has content greater than 95% w/w.

5. Lubricant according to any one of the preceding claims, characterized in that the said polyol is an aliphatic polyol that has from 2 to 6 hydroxyl groups.

6. Lubricant according to Claim 5, characterized in that the said polyol is selected from the group consisting of ethylene glycol, 1,2- propylene glycol, 1,3-propylene glycol, 1,4-butanediol, 1,5-pentanediol, 1,6-hexanediol, glycerol, trimethylolpropane, pentaerythritol, dipentaerythritol and sorbitol.

7. Stabilizing lubricant for thermoplastics, consisting of a metallic soap of pure stearic acid.

8. Stabilizing lubricant according to Claim 7 or from 2 to 4, characterized in that the said metal is a divalent metal.

9. Stabilizing lubricant according to Claim 8, characterized in that the said metal is selected from the group consisting of calcium, magnesium or zinc.

10. Stabilizing lubricant for thermoplastics, consisting of a mixture of an ester and a metallic soap of stearic acid according to Claims from 1 to 9.

11. Composition with lubricating activity comprising an effective quantity of a lubricant of Claims 1-6 in combination with conventional vehicles and additives.

12. Composition with lubricating and stabilizing activity comprising an effective quantity of a stabilizing lubricant of Claims 7-10.

13. Composition according to Claims 11-12 comprising a polyethylene wax.

14. Process for the manufacture of articles in thermoplastics, characterized in that a lubricant of Claims 1-10 or a composition of Claims 11-13 is used.
